# EUROPEAN PATENT APPLICATION

(11) **EP 3 890 181 A1**
(43) Date of publication of application: **06.10.2021**
(21) Application number: 20167939.6
(22) Date of filing: 03.04.2020
(51) Int. Cl.: H02P 1/02, H02P 9/00, H02P 9/26, H02P 9/30, H02P 25/16, H02P 25/18, H02P 25/22, H02P 25/32, H02P 1/16, H02P 1/26

(54) **METHOD FOR OPERATING MULTI-PHASE GENERATOR, AND ARRANGEMENT FOR MULTI-PHASE GENERATOR**

(71) Applicant: ABB Schweiz AG, 5400 Baden (CH)
(72) Inventor: Westerlund, Jan, 00380 Helsinki (FI); Ryyppö, Tommi, 00380 Helsinki (FI); Szucs, Aron, 00380 Helsinki (FI)
(74) Representative: Kolster Oy Ab

(57) **Abstract**

A method for operating a multi-phase generator, and An arrangement for a multi-phase generator comprising a stator with a plurality of phases, each of the phases of the stator comprising a phase winding (W) having at least two phase winding circuits (C₁, C₂), the arrangement comprising switching means (S₁, S₂, S₃) configured to connect, in a first winding configuration, in each of the phases of the stator all of the at least two phase winding circuits(C₁, C₂) of the phase of the stator electrically in parallel with each other, and connect, in a second winding configuration, in each of the phases of the stator at least two of the at least two phase winding circuits of the phase of the stator electrically in series with each other, and control means (100) configured to control the switching means (Si, S₂, S₃) from the first winding configuration to the second winding configuration in response to a detected predetermined fault condition.

## Description

### FIELD

The invention relates to a method for operating a multi-phase generator, and to an arrangement for a multi-phase generator.

### BACKGROUND

Electric power generation equipment, such as electric generators, for supplying electric power to an electric network (grid) may be subject to various grid codes defining parameters such an equipment connected to the electric network, such as a public grid, has to meet to ensure safe and proper functioning of the electric system. The grid code may be specified by an authority responsible for the electric network, for example.

Contents of a grid code may vary depending on the particular requirements of the electric network in question. As an example, a grid code may specify the required behaviour of a connected generator during system disturbances. These may include a requirement to "ride through" short disturbances or interruptions in the connection, i.e. a Fault Ride Trough, FRT, requirement. As an example, the FRT requirement may specify the required capability of an electric generator to stay connected during periods of lowered voltage (i.e. a voltage dip) in the electric network.

A problem related to such FRT requirements of various electrical network grid codes, or corresponding requirements, is that they may be too demanding for normally designed generators. Some solutions for improving the capability of a generator to fulfil such requirements include increasing the generator size and decreasing short circuit reactance of the generator or adding inertia to the generator, for instance. However, both of these solutions may be relatively expensive ways to improve the required capabilities of the generator as they may require e.g. substantial structural changes to the generator.

### BRIEF DESCRIPTION

An object of the present invention is thus to provide a method and an apparatus for implementing the method so as to overcome the above problem or at least to alleviate the problem. The objects of the invention are achieved by a method, an arrangement, and a multi-phase generator which are characterized by what is stated in the independent claims. The preferred embodiments of the invention are disclosed in the dependent claims.

The invention is based on the idea of changing a winding configuration of a multi-phase generator comprising a stator with a plurality of phases, each of the phases of the stator comprising at least two stator winding circuits, in response to detecting a predetermined fault condition from a first winding configuration to a second winding configuration. In the first winding configuration, in each of the phases of the stator, all of the at least two stator winding circuits of the phase of the stator may be electrically connected in parallel with each other, and in the second winding configuration, in each of the phases of the stator, at least two of the at least two stator winding circuits of the phase of the stator may be electrically connected in series with each other.

An advantage of the solution of the invention is that the FRT capability of the generator can be improved in a relatively cost-effective way.

### BRIEF DESCRIPTION OF THE DRAWINGS

In the following the invention will be described in greater detail by means of preferred embodiments with reference to the accompanying drawings, in which
Figure 1 illustrates an example of an electric system according to an embodiment;
Figure 2 illustrates examples of winding configurations according to embodiments;
Figure 3 illustrates examples of winding configurations according to embodiments; and
Figure 4 illustrates an example of an arrangement according to an embodiment.

### DETAILED DESCRIPTION

The application of the various embodiments is not limited to any specific system, but it can be used in connection with various electric systems. Moreover, the use of the various embodiments is not limited to systems employing any specific fundamental frequency or any specific voltage level, for example.

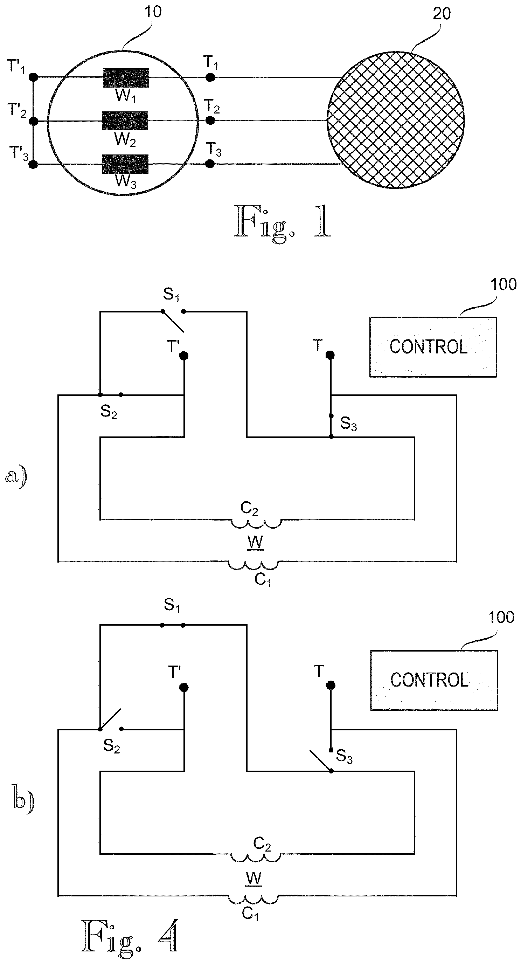

Figure 1 shows an example of an electric system according to an embodiment. The figure only shows components relevant for understanding the various embodiments. The exemplary system of Figure 1 comprises a three-phase AC (Alternating Current) generator 10 comprising a stator with three phases each having a respective phase winding W₁, W₂, W₃. The number of the phases of the generator 10 may vary and hence the generator could generally be a multi-phase generator comprising a stator with a plurality of phases such that the number of phases is 3 or greater than 3. As an example, the number of phases could be 5, 6, 7, 9, 12, 15, or any other number depending on the system. Moreover, the generator 10 may be any type of generator such as a synchronous generator or an asynchronous generator (an induction generator). Moreover, a rotor (not shown in the figures) of the generator 10 may be of any type and depend on the generator type. The generator 10 may be connected to and configured to receive mechanical energy from any kind of source (not shown in the figure), such as a wind turbine, a gas turbine, a water turbine, a steam turbine, or a combustion engine. In the example of Figure 1, the phase windings W₁, W₂, W₃ of the stator are star-connected (wye-connected) by connecting the second terminals T'₁, T'₂, T'₃ of the phase windings W₁, W₂, W₃ together. The first terminals T₁, T₂, T₃ of the phase windings W₁, W₂, W₃ then form an AC output of the generator 10. Alternatively, the phase windings W₁, W₂, W₃ of the stator could be delta-connected (mesh-connected), for example. Further, the AC output T₁, T₂, T₃ of the generator 10 may be connected to an electric system, which may comprise at least one AC network 20, such as a public electrical grid or another kind of AC network, in order to supply power to the electric system, when the generator 10 is in normal operation. There may be one or more switches (not shown) between the generator 10 and the AC network 20, enabling the connection and disconnection of the generator 10 to/from the AC network 20.

According to an embodiment, each of the phase windings W₁, W₂, W₃ of the stator comprise at least two phase winding circuits. The phase winding circuit generally refers to a circuit, such as a coil or a group of coils connected together, in the phase winding. Depending on the type of the generator, there may be a number of such phase winding circuits in each phase of the generator. As an example, a two-pole generator may have two such phase winding circuits in each phase of the generator and a four-pole generator may have four such phase winding circuits in each phase of the generator. The phase winding circuits may be connected in parallel and/or in series with one another in each phase of the generator depending on the generator design, for example.

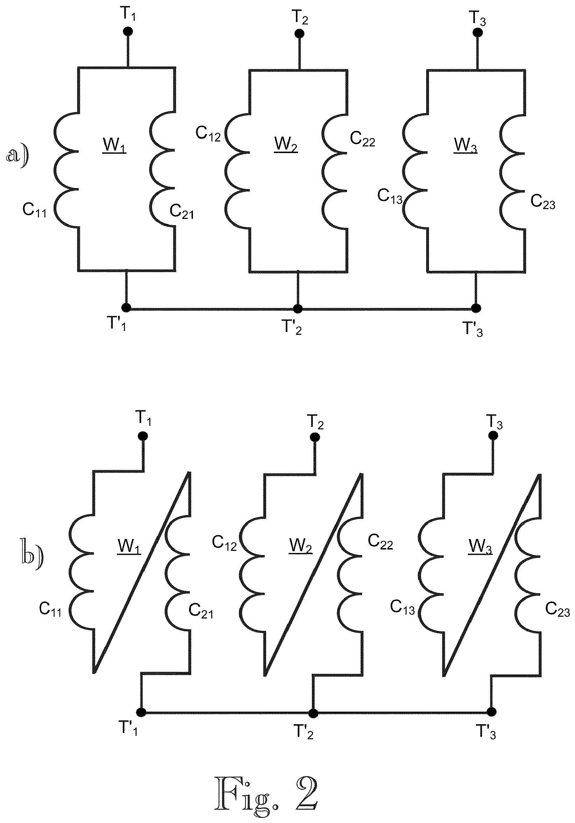

Figure 2 illustrates examples of winding configurations of a stator, which has two phase winding circuits in each phase of the generator each phase represented by the respective phase winding W₁, W₂, W₃. The first phase winding W₁ has a first phase winding circuit C₁₁ and a second phase winding circuit C₂₁, the second phase winding W₂ has a first phase winding circuit C₁₂ and a second phase winding circuit C₂₂, and the third phase winding W₃ has a first phase winding circuit C₁₃ and a second phase winding circuit C₂₃. In the first winding configuration, i.e. in alternative a) of Figure 2, in each of the phases of the stator the two phase winding circuits of the respective phase of the stator are electrically connected in parallel with each other. In the second winding configuration, i.e. in alternative b) of Figure 2, in each of the phases of the stator the two phase winding circuits of the respective phase of the stator are electrically connected in series with each other. The number of the phase winding circuits in the exemplary configurations could be greater than two, i.e. three or more, in each phase winding W₁, W₂, W₃.

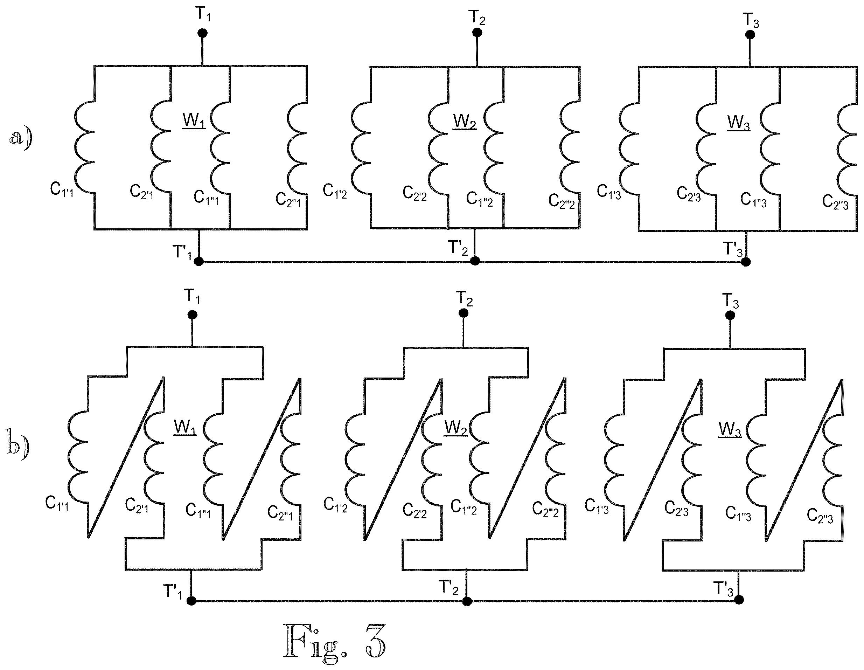

Figure 3 illustrates examples of winding configurations of a stator, which has four, i.e. two pairs of, phase winding circuits in each phase of the generator each phase represented by the respective phase winding W₁, W₂, W₃. The first phase winding W₁ has a first phase winding circuit C₁₁ and a second phase winding circuit C₂₁ of a first pair of phase winding circuits, and a first phase winding circuit C_{1"1} and a second phase winding circuit C_{2"1} of a second pair of phase winding circuits. The second phase winding W₂ has a first phase winding circuit C_{1'2} and a second phase winding circuit C_{2'2} of a first pair of phase winding circuits, and a first phase winding circuit C_{1"2} and a second phase winding circuit C_{2"2} of a second pair of phase winding circuits. The third phase winding W₃ has a first phase winding circuit C_{1'3} and a second phase winding circuit C_{2'3} of a first pair of phase winding circuits, and a first phase winding circuit C_{1"3} and a second phase winding circuit C_{2"3} of a second pair of phase winding circuits. In the first winding configuration, i.e. in alternative a) of Figure 3, in each of the phases of the stator all the four phase winding circuits of the respective phase of the stator are electrically connected in parallel with each other. In the second winding configuration, i.e. in alternative b) of Figure 3, in each of the phases of the stator the two phase winding circuits in each of the two pairs of phase winding circuits of the respective phase winding W₁, W₂, W₃ are electrically connected in series with each other, and the two pairs are electrically connected in parallel with each other as shown. The number of the pairs of the phase winding circuits in the exemplary configurations could be greater than two, i.e. three or more, in each phase winding W₁, W₂, W₃.

According to an embodiment, operating the generator 10 may include operating the generator in a first winding configuration in which in each of the phases of the stator all of the at least two phase winding circuits of the phase of the stator are electrically connected in parallel with each other. Moreover, the operating the generator 10 may further include detecting a predetermined fault condition during the operating of the generator in the first winding configuration, and in response to the detecting of the predetermined fault condition, starting to operate the generator in a second winding configuration in which in each of the phases of the stator at least two of the at least two phase winding circuits of the phase of the stator are electrically connected in series with each other. Thus, the generator 10 may be operated under normal operating conditions, i.e. when no predetermined fault is present, in the first winding configuration in which in each phase of the stator all the phase winding circuits of the respective phase of the stator are electrically connected in parallel with each other as shown e.g. in the alternatives a) of the examples of Figures 2 and 3. Then, after a predetermined fault condition is detected, the generator 10 may be operated in the second winding configuration in which in each phase of the stator at least two phase winding circuits of the respective phase of the stator are electrically connected in series with each other. By doing this kind of change of the winding configuration the flux/voltage level of the generator 10 can be changed, and at the same time the resistance of the generator can be increased. Both of these changes can improve the generator FRT capability, for instance.

According to an embodiment, in the second winding configuration, in each of the phases of the stator all of the at least two phase winding circuits of the phase of the stator are electrically connected in series with each other as shown e.g. in the alternative b) of the example of Figure 2. According to an embodiment, when the phase winding of each of the phases of the stator comprises at least two pairs of phase winding circuits, as in the example of Figure 3, in the second winding configuration in each of the phases of the stator the two phase winding circuits in each of the at least two pairs of phase winding circuits are electrically connected in series with each other, and each such pair is electrically connected in parallel with each other as shown e.g. in the alternative b) of the example of Figure 3.

According to an embodiment, operating the generator 10 may include, in response to the detected predetermined fault condition clearing, starting to operate the generator again in the first winding configuration. Thus, when the generator 10 is operated in the second winding configuration after detecting the fault condition, the winding configuration may be changed back to the first winding configuration upon detecting that the fault condition has cleared.

According to an embodiment, the predetermined fault condition may a fault in an AC output of the generator 10 or a fault in the electric system 20 connected to the AC output of the generator 10, for example. According to an embodiment, such a fault may a phase-to-phase fault of at least two phases or an earth-fault or a combination thereof. Generally, such a predetermined fault condition could be any kind of predetermined abnormal condition of the generator or of the electric system connected thereto. Such an abnormal situation could involve e.g. abnormal values of voltages and/or currents, e.g. a voltage dip in the system.

According to an embodiment, an arrangement is provided for the multi-phase generator 10, which arrangement comprises switching means configured to connect, in a first winding configuration, in each of the phases of the stator all of the at least two phase winding circuits of the phase of the stator electrically in parallel with each other, and connect, in a second winding configuration, in each of the phases of the stator at least two of the at least two phase winding circuits of the phase of the stator electrically in series with each other. According to an embodiment, such an arrangement may be provided as a separate arrangement, as part of the generator 10, or as at least partly part of the generator 10, for example.

Figure 4 illustrates an example of a switching arrangement according to an embodiment. The exemplary switching arrangement shown in Figure 4 can be used for implementing the changing of the winding configuration according to any of the embodiments described above. It should be noted that for the sake of clarity, Figure 4 shows a possible switching arrangement for only two winding circuits C₁, C₂ of one phase of the generator 10. Thus, in case of e.g. a three-phase generator 10 with two phase winding circuits in each of the phase windings, each of the three phases would be equipped with their respective phase-specific switching arrangements. Moreover, in case of e.g. a three-phase generator 10 with four phase winding circuits in each of the phase windings, each of the three phases could be equipped with two respective phase-specific switching arrangements; i.e. with one phase-specific switching arrangement for each pair of phase winding circuits.

The example of Figure 4 thus shows a first phase winding circuit C₁ and a second phase winding circuit C₂ of one phase winding W of the stator of the generator 10. The exemplary two phase winding circuits C₁, C₂ are connected to each other and between the first terminal T and the second terminal T' via switching means, which in the illustrated example comprise a first switch S₁, a second switch S₂, and third switch S₃. In the first switching state, i.e. alternative a) of Figure 4, the first switch S₁ is open, i.e. non-conducting, and the second switch S₂, and the third switch S₃ are closed, i.e. conducting. In this first switching state, the two phase winding circuits C₁, C₂ are connected in parallel between the first terminal T and the second terminal T' of the phase winding W. In the second switching state, i.e. alternative b) of Figure 4, the first switch S₁ is closed, i.e. conducting, and the second switch S₂, and the third switch S₃ are open, i.e. non-conducting. In this second switching state, the two phase winding circuits C₁, C₂ are thus connected in series between the first terminal T and the second terminal T' of the phase winding W. The switches S₁, S₂, S₃ of the exemplary switching means may be any kind of controllable semiconductor switches and/or controllable electromechanical switches, for example. The number and configuration of the switches may vary depending on the number and/or configuration of the phase winding circuits in the phase windings of the generator, for example. Moreover, instead of using separate switches as shown in the example of Figure 4, it is also possible to use one or more multipole switches having two or three or more poles per switch, for instance.

According to an embodiment, each of the three phase windings W₁, W₂, W₃ of e.g. the example of Figure 2 may be equipped with a separate switching arrangement as shown in Figure 4. In other words, in each phase N winding W_{N} (where N is 1, 2 or 3) the first phase winding circuit C_{1N} and the second phase winding circuit C_{2N} of the phase in question may be equipped with a separate switching arrangement as shown in Figure 4. As a result, the winding configuration can be changed between the first and the second winding configurations, i.e. between alternatives a) and b) of Figure 2, by changing, preferably essentially simultaneously, the switching state of each of the phase-specific switching arrangements between the first and the second switching states, respectively. In a similar manner, according to an embodiment, each of the pairs of phase winding circuits of each of the three phase windings W₁, W₂, W₃ of e.g. the example of Figure 3 may be equipped with a separate switching arrangement as shown in Figure 4. In other words, in each phase N winding W_{N} (where N is 1, 2 or 3) each of the pairs of phase winding circuits C_{1'N} + C_{2'N}, and C_{1"N} + C_{2"N} may be equipped with a separate switching arrangement as shown in Figure 4. Consequently, the winding configuration can be changed between the first and the second winding configurations, i.e. between alternatives a) and b) of Figure 3, by changing, preferably essentially simultaneously, the switching state of each of the two phase-specific switching arrangements between the first and the second switching states, respectively.

The arrangement of the example of Figure 4 may further include suitable control means, which may include at least a control arrangement 100, configured to control the switching means S₁, S₂, S₃ between the first winding configuration and the second winding configuration in accordance with any of the embodiments described above. Such a control arrangement 100 may be common to all the switching arrangements of the different phases of the generator 10. The functionality according to the various embodiments described herein may be implemented at least partly by means of the control arrangement 100. The control arrangement 100 may be configured to control all the switching means S₁, S₂, S₃ to change their state essentially simultaneously, during the transition between the first and the second winding configurations. According to an embodiment, the control means, such as the control arrangement 100, is/are configured to detect the predetermined fault condition and/or to receive an indication of the detected predetermined fault condition. Accordingly, the control means, such as the control arrangement 100, may be configured to monitor e.g. current and/or voltage values and detect the predetermined fault condition based on such values. Monitored current and/or voltage values may be obtained by a suitable measuring arrangement including e.g. current and/or voltage transducers (not shown in the figures) connected to the phases of the AC output of the generator 10 or of the electric system 20 connected to the AC output of the generator. In many electric systems, such values may be readily available and thus the implementation of the various embodiments does not necessarily require any separate or specific measuring arrangements. The control means, such as the control arrangement 100, may also receive an indication of the detected predetermined fault condition from another entity (not shown in the figures), such as a protective relay of the generator 10 and/or a protective relay located in the electric system 20. How such values are obtained is of no relevance to the basic idea of the invention and depends on the particular electricity system to be monitored.

The control means, such as the control arrangement 100, controlling the switching arrangements of the phases of the generator 10 according to any one of the embodiments herein, or a combination thereof, may be implemented as one physical unit or as two or more separate physical units that are configured to implement the functionality of the various embodiments. Herein the term 'unit' generally refers to a physical or logical entity, such as a physical device or a part thereof or a software routine. The control means, such as the control arrangement 100 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the functionality of the various embodiments, or a part thereof, may further comprise suitable input means for receiving e.g. measurement and/or control data, and output means for outputting e.g. control or other data. It is also possible to use a specific integrated circuit or circuits, and/or discrete electric components and devices for implementing the functionality according to any one of the embodiments.

The functionality of the various embodiments may be implemented at least partly in existing electric system components. Existing control systems of generators may comprise processors and memory that may be utilized in the functions according to the various embodiments described herein. Thus, at least some modifications and configurations required for implementing an embodiment in existing electric system components, such as generators, may be performed as software routines, which may be implemented as added or updated software routines. If at least part of the functionality of an embodiment is implemented by software, such software may be provided as a computer program product comprising computer program code which, when run on a computer controlling a converter, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

## Claims

1. A method for operating a multi-phase generator comprising a stator with a plurality of phases, each of the phases of the stator comprising a phase winding (W; W₁, W₂, W₃) having at least two phase winding circuits (C₁, C₂; C₁₁, C₂₁, C₁₂, C₂₂, C₁₃, C23; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}), the method comprising:
operating the generator (10) in a first winding configuration in which in each of the phases of the stator all of the at least two phase winding circuits (C₁, C₂; C₁₁, C₂₁, C₁₂, C₂₂, C₁₃, C₂₃; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}) of the phase of the stator are electrically connected in parallel with each other;
detecting a predetermined fault condition during the operating of the generator (10) in the first winding configuration;
in response to the detecting of the predetermined fault condition, starting to operate the generator (10) in a second winding configuration in which in each of the phases of the stator at least two of the at least two phase winding circuits (C₁, C₂; C₁₁, C₂₁, C₁₂, C₂₂, C₁₃, C₂₃; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}) of the phase of the stator are electrically connected in series with each other.

2. A method as claimed in claim 1, wherein in the second winding configuration in each of the phases of the stator all of the at least two phase winding circuits (C₁, C₂; C₁₁, C₂₁, C₁₂, C₂₂, C₁₃, C₂₃) of the phase of the stator are electrically connected in series with each other.

3. A method as claimed in claim 1, wherein the phase winding (W₁, W₂, W₃) of each of the phases of the stator comprises at least two pairs of phase winding circuits (C_{1'1}, C_{2'1}, C_{1'1}, C_{2"1}, C_{1'2}, C_{2'2}, C_{1"2}, C_{2"2}, C_{1'3}, C_{2'3}, C_{1"3}, C_{2"3}), and wherein in the second winding configuration in each of the phases of the stator the two phase winding circuits in each of the at least two pairs of phase winding circuits are electrically connected in series with each other, and each such pair is electrically connected in parallel with each other.

4. A method as claimed in any one of claims 1 to 3, comprising:
in response to the detected predetermined fault condition clearing, starting to operate the generator (10) again in the first winding configuration.

5. A method as claimed in any one of claims 1 to 4, wherein the predetermined fault condition is a fault in an AC output of the multi-phase generator (10) or a fault in an electric system (20) connected to the AC output of the multi-phase generator (10).

6. A method as claimed in claim 5, wherein the fault is a phase-to-phase fault of at least two phases or an earth-fault.

7. An arrangement for a multi-phase generator comprising a stator with a plurality of phases, each of the phases of the stator comprising a phase winding (W; W₁, W₂, W₃) having at least two phase winding circuits (C₁, C₂; C₁₁, C₂₁, C₁₂, C₂₂, C₁₃, C₂₃; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}), the arrangement comprising:
switching means (S₁, S₂, S₃) configured to connect, in a first winding configuration, in each of the phases of the stator all of the at least two phase winding circuits(C₁, C₂; C₁₁, C₂₁, C₁₂, C₂₂, C₁₃, C₂₃; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}) of the phase of the stator electrically in parallel with each other, and connect, in a second winding configuration, in each of the phases of the stator at least two of the at least two phase winding circuits of the phase of the stator electrically in series with each other;
control means (100) configured to control the switching means (S₁, S₂, S₃) from the first winding configuration to the second winding configuration in response to a detected predetermined fault condition.

8. An arrangement as claimed in claim 7, wherein the switching means (S₁, S₂, S₃) are configured to connect, in the second winding configuration, in each of the phases of the stator all of the at least two phase winding circuits (C₁, C₂; C₁₁, C₂₁, C₁₂, C₂₂, C₁₃, C₂₃) of the phase of the stator electrically in series with each other.

9. An arrangement as claimed in claim 7, wherein, when the phase winding (W₁, W₂, W₃) of each of the phases of the stator comprises at least two pairs of phase winding circuits (C_{1'1}, C_{2'1}, C_{1'1}, C_{2"1}, C_{1'2}, C_{2'2}, C_{1"2}, C_{2"2}, C_{1'3}, C_{2'3}, C_{1"3}, C_{2"3}), the switching means (S₁, S₂, S₃) are configured to connect, in the second winding configuration, in each of the phases of the stator the two phase winding circuits in each of the at least two pairs of phase winding circuits electrically in series with each other, and each such pair electrically in parallel with each other.

10. An arrangement as claimed in any one of claims 7 to 9, wherein the control means (100) are configured to control the switching means (S₁, S₂, S₃) from the second winding configuration back to the first winding configuration in response to the detected predetermined fault condition clearing.

11. An arrangement as claimed in any one of claims 7 to 10, wherein the predetermined fault condition is a fault in an AC output of the multi-phase generator (10) or a fault in an electric system (20) connected to the AC output of the multi-phase generator (10).

12. An arrangement as claimed in claim 11, wherein the control means (100) are configured to detect the predetermined fault condition and/or to receive an indication of the detected predetermined fault condition.

13. An arrangement as claimed in any one of claims 7 to 12, wherein the switching means (S₁, S₂, S₃) comprise one or more controllable semiconductor switches and/or one or more controllable electromechanical switches.

14. A multi-phase generator comprising:
a stator with a plurality of phases, each of the phases comprising a phase winding (W; W₁, W₂, W₃) having at least two phase winding circuits (C₁, C₂; C₁₁, C₂₁, C₁₂, C₂₂, C₁₃, C₂₃; C_{1'1}, C_{2'1}, C_{1"1}, C_{2"1}, C_{1'2}, C_{2'2}, C_{1"2}, C_{2"2}, C_{1'3}, C_{2'3}, C_{1"3}, C_{2"3}); and
an arrangement as claimed in any one of claims 7 to 13.

15. A multi-phase generator as claimed in claim 14, wherein the generator (10) is a three-phase synchronous generator, and wherein the stator comprises three phases.
